# EUROPÄISCHE PATENTANMELDUNG

(11) **EP 2 284 041 A1**
(43) Veröffentlichungstag der Anmeldung: **16.02.2011**
(21) Anmeldenummer: 10169006.3
(22) Anmeldetag: 09.07.2010
(51) Int. Cl.: B60R 3/00

(54) **Tritthalterung**

(30) Priorität: 14.08.2009 DE 202009011112 U
(71) Anmelder: Sommer Road Cargo Solutions GmbH & Co. KG, 06636 Laucha an der Unstrut (DE)
(72) Erfinder: Franz, Carl, 42111, Wuppertal (DE)
(74) Vertreter: Alber, Norbert

(57) **Zusammenfassung**

Eine Tritthalterung (2) zur Befestigung einer Trittstufe (1) an einem Fahrzeug (20), vorzugsweise am Heck (20a) desselben, ist so ausgebildet, dass sie ein Deformationsteil (5) aufweist, das beim Aufprall des Fahrzeuges (20) auf ein Hindernis die Energie des Aufpralls vorwiegend durch plastische Verformung absorbiert, und sie im Schadensfall durch zwei einfach lösbare Befestigungen (3) und (4) mit dem Fahrzeug (20) und der Trittstufe (1) verbunden und damit einfach austauschbar ist.

## Beschreibung

### I. Anwendungsgebiet

Die Erfindung betrifft die Tritthalterung für einen Aufstiegstritt, wie er insbesondere bei Paket-Verteilerfahrzeugen quer verlaufend unter der Hecktür des Fahrzeuges angeordnet ist, falls der Ladeboden des Fahrzeuges zu hoch liegt, um vom Fahrer ohne Zwischenstufe bewältigt werden zu können.

### II. Technischer Hintergrund

Derartige Aufstiegstrittstufen werden bei dem häufigen und schnellen Rangieren solcher Verteilerfahrzeuge beim Rückwärtsfahren häufig beschädigt.

Aus diesem Grund ist es bereits bekannt, solche Trittstufen gefedert, beispielsweise mittels einer gebogenen Blattfeder, am Heck des Fahrzeuges zu befestigen, um geringe Stöße gegen die Trittstufe unbeschadet zu überstehen.

Nachteilig ist dabei, dass zum einen die Trittstufe selbst relativ massiv ausgebildet sein muss, um solche Stöße ohne Beschädigung an die dahinter, also zwischen Trittstufe und Fahrzeug, angeordnete Feder weiterzugeben.

Des Weiteren können solche gefederten Lösungen nur einen begrenzten Deformationsweg unbeschadet überstehen. Bei noch größerem Deformationsweg tritt dann eine Beschädigung auf, die relativ aufwendig und kostenintensiv zu beseitigen ist.

### III. Darstellung der Erfindung

### a) Technische Aufgabe

Es ist daher die Aufgabe gemäß der Erfindung, eine Tritthalterung für eine Trittstufe zu schaffen, die einfach und kostengünstig herzustellen und ebenso einfach und kostengünstig im Beschädigungsfall auszutauschen ist.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Zwischen dem Fahrzeug und der Trittstufe wird ein Deformationsteil angeordnet, das sich bei der Kollision mit einem Hindernis, insbesondere beim Rückwärtsfahren bzw. Rangieren und Einparken, z. T. elastisch, jedoch vorzugsweise überwiegend plastisch verformt. Durch die plastische Verformung wird die Energie des Aufpralls zumindest überwiegend absorbiert.

Das Deformationsteil ist sowohl am Fahrzeug als auch an der Trittstufe einfach lösbar befestigt, wobei für die Befestigung weitere Bauteile verwendet werden können. Die Trittstufe selbst ist mit mindestens einer das Deformationsteil enthaltenden Tritthalterung am Fahrzeug, meist am Heck des Fahrzeuges, befestigt. In der Regel wird die Trittstufe mit zwei der Tritthalterungen, die bei der überwiegend anzutreffenden Befestigung am Heck quer zum Fahrzeug einen Abstand aufweisen, am Fahrzeug befestigt.

Die Stabilität des Deformationsteils ist in Richtung der Deformation geringer als die Stabilität der Bauteile der fahrzeug- und trittseitigen Befestigung, des Hilfsrahmens und der Trittstufe, so dass eine Beschädigung beim Aufprall überwiegend oder ausschließlich am Deformationsteil auftritt.

Eine im Sinne der Erfindung ausgebildete Tritthalterung zeichnet sich vor allem dadurch aus, dass im Beschädigungsfall nur ein geringer Schaden hervorgerufen wird und insbesondere ein Schaden am Fahrzeug vermieden oder begrenzt wird. Die Tritthalterung ist aus wenigen, einfach zu fertigenden und zu montierenden Teilen zusammengesetzt. Der Schaden kann deshalb schnell und kostengünstig durch den Austausch nur weniger Teile, insbesondere der Deformationsteile behoben werden. Durch die geringe Elastizität der Tritthalterung merkt der Fahrer jedoch gleichzeitig schnell, wenn er rückwärts gegen ein starres Hindernis fährt.

Das Deformationsteil wird für die meisten Ausführungsformen teilweise unterhalb des Fahrzeuges angeordnet, um die Fahrzeuglänge möglichst wenig zu vergrößern.

Nach einer vorteilhaften Weiterbildung der Erfindung ist vorgesehen, das Deformationsteil an der fahrzeug- und/oder trittseitigen Befestigung lediglich durch Einstecken zu montieren. Die Einsteckrichtung ist dabei insbesondere quer zur Fahrzeuglängsachse gerichtet. Dadurch kann der Aufwand für die Erstmontage oder bei der Demontage im Beschädigungsfall weiter reduziert werden.

Deformationsteil und trittseitige Befestigung können auch ein zusammenhängendes oder einstückiges Bauteil bilden.

Bei der Trittstufe wird es sich vorzugsweise um ein Strangpressprofil handeln, so dass sie nur auf Länge zugeschnitten werden muß.

Die Trittstufe wird im Regelfall quer zur Fahrzeuglängsachse verlaufend montiert. Um sie einfach über die trittseitige Befestigung mit dem Deformationsteil zu verbinden und im Falle der Beschädigung einzelne Komponenten einfach austauschen zu können, kann sie an ihrer Unterseite nach unten offene Nuten, deren offene Seite verengt ist, besitzen.

Diese Nuten nehmen Schiebemuttern auf, die in den Nuten längsverschieblich, aber nicht drehbar sind. Dadurch können Toleranzen in der Fertigung der Komponenten bei der Montage ausgeglichen werden.

Durch die Seitenflanken der Nuten werden die Muttern gegen Verdrehen fixiert, so dass eine Verschraubung mit der trittseitigen Befestigung durch entsprechende zu den Muttern passende Schrauben einfach möglich ist. Anstelle der Schiebemuttern können in den Nuten auch die Schraubenköpfe geführt werden.

Die trittseitige Befestigung kann vorteilhaft gestaltet werden, indem sie aus einer horizontalen Strebe besteht, die am freien Ende des U-förmigen Deformationsteiles befestigt ist und von diesem aus unter die Trittstufe ragt. Die Strebe wird über Bohrungen insbesondere von unten her in die Schiebemuttern der Trittstufe hineinverschraubt. Dadurch ist der Aufbau schnell montiert bzw. demontiert.

Eine weitere vorteilhafte Ausgestaltung der Erfindung ergibt sich aus Anspruch 6. Das Deformationsteil besteht, um es einfach und kostengünstig fertigen zu können, aus einem handelsüblichen Profil, z. B. einem Rechteck- oder Rohrprofil. Von oben betrachtet ist es aus drei Schenkeln bestehend vorzugsweise U-förmig gestaltet. Die beiden freien Schenkel liegen quer, der verbindende Schenkel längs zur Fahrzeugachse. Anstelle des eckigen U-förmigen Deformationsteiles kann auch ein abgerundetes, z.B. aus einem durchgehenden Profil gebogenes Deformationsteil in der Tritthalterung integriert werden.

Dabei kann das Deformationsteil z. B. aus Stahl oder Aluminium bestehen. Die Trittstufe besteht aus Gewichtsgründen meist aus Aluminium.

Die freien Enden des Deformationsteils sind jeweils mit der fahrzeug- bzw. trittseitigen Befestigung verbunden. Aus Fertigungsgründen bietet es sich an, das U-Teil mit der trittseitigen Befestigung zu verschweißen und es mit dem verbleibenden freien Ende als fahrzeugseitige Befestigung in einen Durchbruch des Aufnahmeprofils in Querrichtung hindurchzustecken, so dass es im Beschädigungsfall einfach vom Fahrzeug demontiert werden kann. Auch die umgekehrte Lösung ist möglich.

Die fahrzeugseitige Befestigung kann aus einem Hilfsrahmen aus einem geeigneten Profil bestehen, der am Längsträger des Fahrzeuges befestigt, z. B. verschraubt ist, sowie einem an diesem Hilfsrahmen befestigten, z. B. verschraubten, nach unten gerichteten Aufnahmeprofil.

Alternativ kann das Deformationsteil auch aus einem Sprengzapfen, der in eine Sprengbuchse eindringt, bestehen. Die Energie einer Kollision wird dann dadurch absorbiert, dass der Zapfen die Buchse aufweitet oder sogar sprengt. Das Innere der Buchse und/oder das Äußere des Zapfens weisen einen in Verlaufsrichtung zunehmenden Querschnitt auf und sind konisch gestaltet. Die Sprengbuchse kann im Beschädigungsfall einfach und kostengünstig ausgetauscht werden, der Sprengzapfen ist meist massiv.

Grundsätzlich kann es sich bei dem Deformationsteil bei einer einfachen Ausführung auch um ein Profilteil, z. B. ein Rohrprofil handeln, das in der Deformationsrichtung angeordnet ist, so dass im Deformationsfall die Energie des Aufpralls durch eine Stauchung des Profilteils in Längsrichtung absorbiert wird.

Nach einer weiteren vorteilhaften Weiterbildung der Erfindung kann das Deformationsteil in Gestalt des Profilteiles oder der Kombination aus Sprengbuchse und Sprengzapfen als weiteres Deformationsteil zusätzlich zwischen den beiden freien Schenkeln des U-Teils als Deformationsteil angeordnet werden. Dies ermöglicht eine zusätzliche Aufnahme der Energie des Aufpralls und den einfachen Austausch beschädigter Teile, um z. B. auch einen stärkeren Aufprall zu kompensieren.

### c) Ausführungsbeispiele

Ausführungsformen gemäß der Erfindung sind im Folgenden anhand der beigefügten Zeichnungen beispielhaft näher beschrieben. Es zeigen:
- Fig. 1a:: eine Tritthalterung mit U-förmigem Deformationsteil in Drauf- sicht,
- Fig. 1b:: eine Tritthalterung mit U-förmigem Deformationsteil in seitlicher Ansicht mit Blickrichtung in Fahrzeug-Querachse,
- Fig. 2:: die vergrößerte Detaildarstellung aus Figur 1b,
- Fig. 3:: Sprengbuchse und Sprengzapfen als Deformationsteil,
- Fig. 4a,b:: ein Profilteil als Deformationsteil im undeformierten und defor- mierten Zustand.

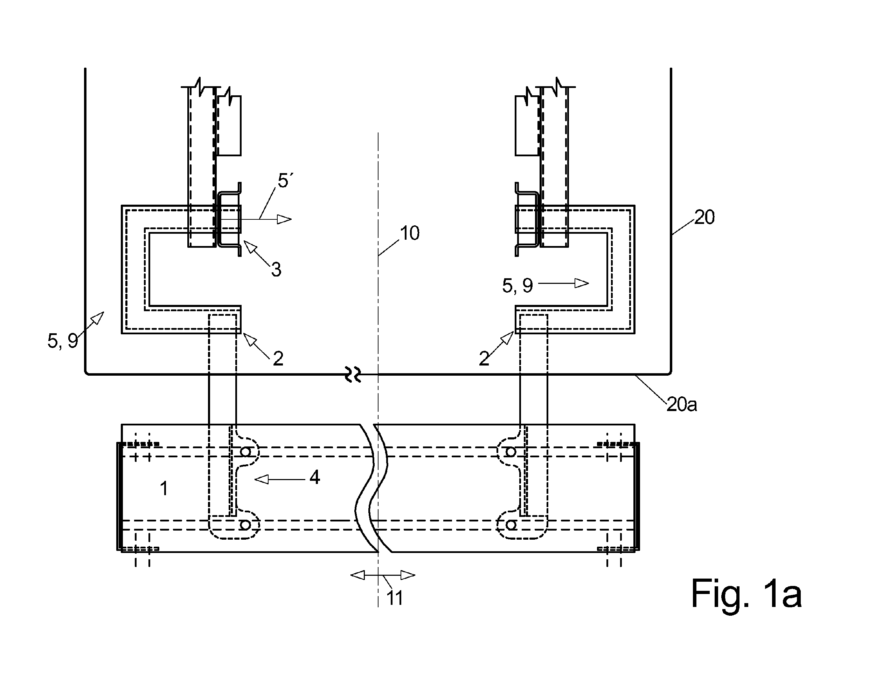

In Fig. 1a ist die Tritthalterung 2 mit einem als U-Teil 9 ausgebildeten Deformationsteil 5 in der Draufsicht zu sehen.

Das U-Teil 9 hat zwei freie und einen verbindenden Schenkel. Der verbindende Schenkel ist in Fahrzeuglängsachse 10, die beiden freien Schenkel in Querrichtung 11 angeordnet.

Der fahrzeugseitige freie Schenkel ist mit der fahrzeugseitigen Befestigung 3 verbunden, die am Fahrzeug 20 befestigt wird. Im Ausführungsbeispiel wird der fahrzeugseitige freie Schenkel dabei in Einsteckrichtung 5' in einen Durchbruch des Aufnahmeprofils 13 der fahrzeugseitigen Befestigung 3 gesteckt.

Der andere freie Schenkel ist mit der trittseitigen Befestigung 4 verbunden, die im Ausführungsbeispiel mit der sich in Fahrzeugquerrichtung 11 erstreckenden Trittstufe 1 verschraubt ist. Die Trittstufe 1 ist hier durch zwei Tritthalterungen 2, die in Querrichtung 11 jeweils den gleichen Abstand zur Fahrzeuglängsachse 10 haben, am Heck 20a des Fahrzeugs 20 befestigt.

Beim Aufprall verformt sich das Deformationsteil 5, bei geringen Kräften zunächst elastisch, bei größeren Kräften dann plastisch, wodurch die Energie des Aufpralls weitgehend absorbiert und die Beschädigung z.B. der Stoßstange des Fahrzeugs verhindert wird.

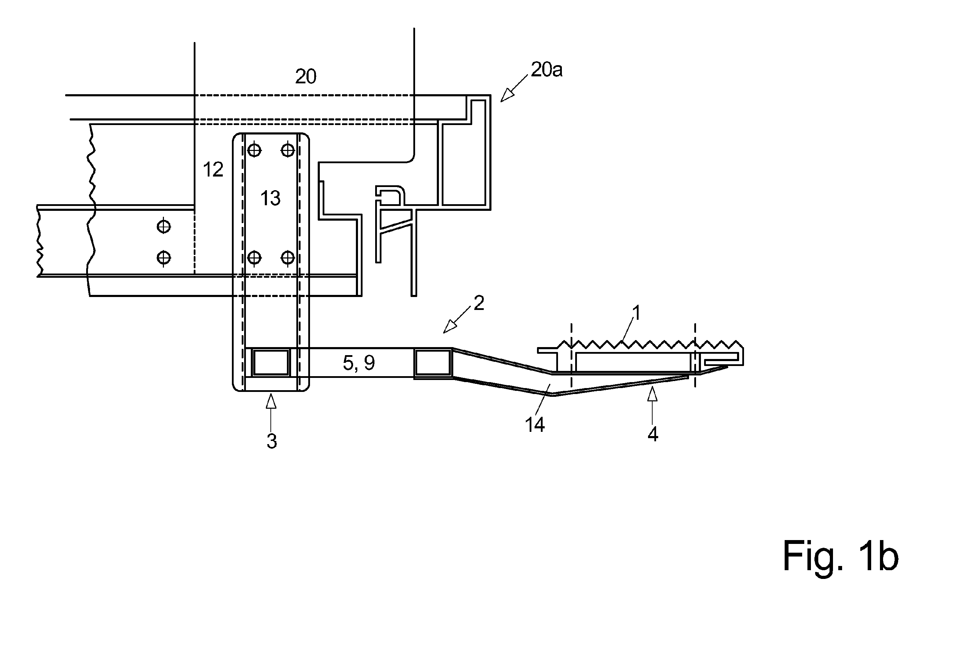

Fig. 1b zeigt, dass das als U-Teil 9 ausgebildete Deformationsteil 5 aus einem rechteckförmigen Hohlprofil gebildet ist. Die fahrzeugseitige Befestigung 3 besteht aus einem Aufnahmeprofil 13, das senkrecht an einem Hilfsrahmen 12 verschraubt ist. Der Hilfsrahmen 12 ist am Heck 20a am Längsträger des Fahrzeuges 20 befestigt.

Die Trittstufe 1 ist über 2 Schrauben mit der Strebe 14 der trittseitigen Befestigung 4, die mit dem dem Fahrzeug abgewandten freien Schenkel des U-Teils 9 verbunden ist, verschraubt.

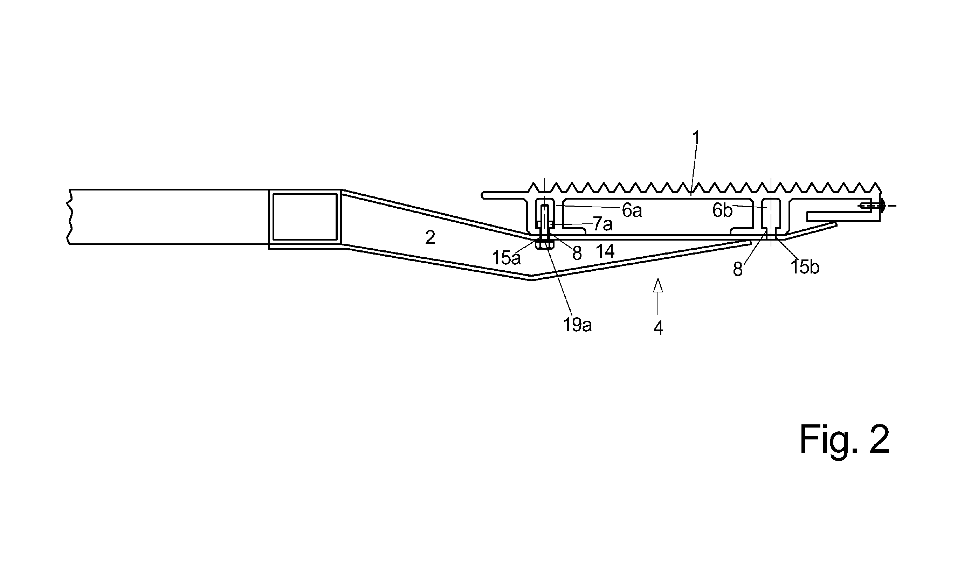

Fig. 2 zeigt als Ausschnitt aus Fig. 1b die Verschraubung der Trittstufe 1 über 2 Schrauben mit der Strebe 14 der trittseitigen Befestigung 4 als Teil der Tritthalterung 2.

Die Trittstufe 1 besitzt Nuten 6a, 6b, die nach oben geschlossen und nach unten offen sind und Teil der Profilform der Trittstufe 1 sind, mit einer Verengung 8 an der Unterseite.

In den Nuten befinden sich Schiebemuttern 7a... die in den Nuten 6a, 6b, die sich in Längsrichtung der Trittstufe 1 erstrecken, in dieser Richtung verschoben werden können, um z.B. trotz Toleranzen bei der Befestigung der Tritthalterung am Fahrzeugheck die Trittstufe 1 einfach und verspannungsfrei mit der Tritthalterung 2 verschrauben zu können. Die Muttern 7a,b sind in den Nuten 6a,b verdrehfest, so dass eine Verschraubung durch Schrauben 19a... die von unten durch die Bohrungen 15a,b der Strebe gesteckt werden, einfach möglich ist.

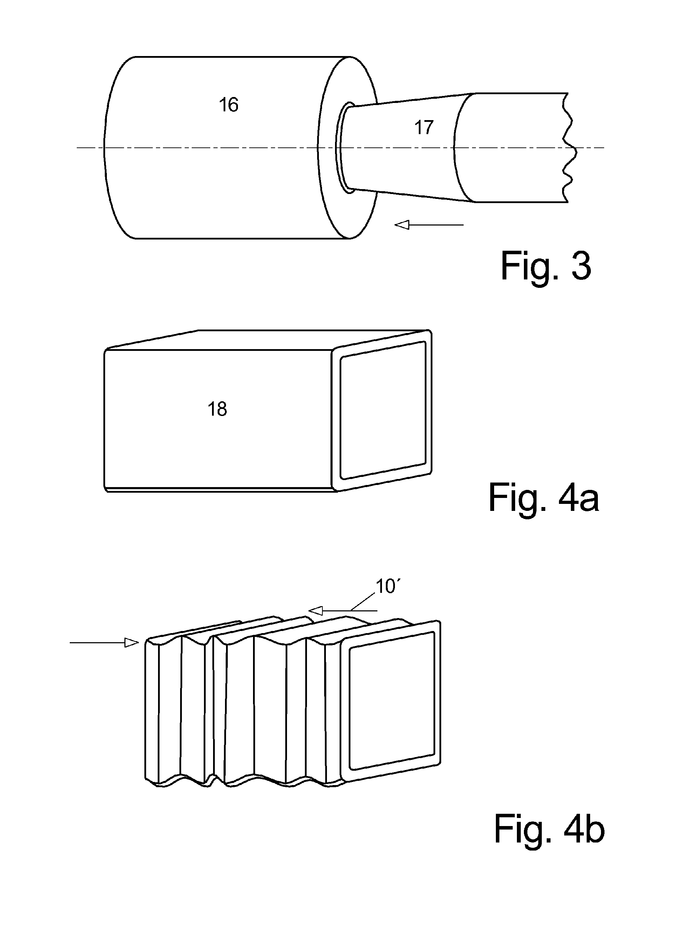

Fig. 3 zeigt, dass anstelle des in den vorangehenden Figuren beschriebenen U-förmigen Deformationsteils 5 auch eine Kombination aus Sprengbuchse 16 und Sprengzapfen 17 in der Tritthalterung verwendet werden kann, um die Energien des Aufpralls zu absorbieren.

Der Sprengzapfen 17, der z.B. wie in der Abbildung als Konus mit kreisförmigem, aber auch z.B. quadratischem Querschnitt gestaltet werden kann, schiebt sich beim Aufprall in die als entsprechendes Gegenstück gestaltete Sprengbuchse und weitet diese auf, wobei die Energie absorbiert wird.

Auch ein einfaches Profil, das wie in den Figuren 4a und 4b einen quadratischen, aber auch jeden anderen, vorzugsweise geschlossenen Querschnitt haben kann, ist geeignet, als Deformationsteil 5 in der Tritthalterung 2 verwendet zu werden.

Beim Aufprall faltet sich das aus einem geeigneten Material, z.B. Aluminium bestehende Profil 18 wie in Fig. 4b dargestellt in Deformationsrichtung 10' zusammen und absorbiert damit die Energie des Aufpralls.

### BEZUGSZEICHENLISTE

- 1: Trittstufe
- 2: Tritthalterung
- 3: fahrzeugseitige Befestigung
- 4: trittseitige Befestigung
- 5: Deformationsteil
- 5': Einsteckrichtung
- 6a, b: Nuten
- 7a, b: Schiebemutter
- 8: Verengung
- 9: U-Teil
- 10: Fahrzeug-Längsachse
- 10': Deformationsrichtung
- 11: Querrichtung
- 12: Hilfsrahmen
- 13: Aufnahmeprofil
- 14: Strebe
- 15a, b: Bohrung
- 16: Sprengbuchse
- 17: Sprengzapfen
- 18: Rohrprofil
- 19a, b: Befestigungsschraube
- 20: Fahrzeug
- 20a: Heck

## Patentansprüche

1. Tritthalterung (2) für die Trittstufe (1) eines Fahrzeug (20) mit
- einer fahrzeugseitigen Befestigung (3),
- einer trittseitigen Befestigung (4),
- einem Deformationsteil (5) zwischen den Befestigungen (3, 4).

2. Tritthalterung (2) nach Anspruch 1,
**dadurch gekennzeichnet, dass**
- das Deformationsteil (5) an wenigstens einer der Befestigungen (3, 4) lediglich durch Einstecken montiert ist und insbesondere
- die Einsteckrichtung (5') quer zur Fahrzeuglängsachse (10) gerichtet ist.

3. Tritthalterung (2) nach einem der vorhergehenden Ansprüche, **dadurch gekennzeichnet, dass**
das Deformationsteil (5) einstückig mit der trittseitigen Befestigung (4) zusammen ausgebildet ist.

4. Tritthalterung (2) nach einem der vorhergehenden Ansprüche, **dadurch gekennzeichnet, dass**
- die Trittstufe (1) ein Strangpressprofil ist, welches mit seiner Längserstreckung in Querrichtung (11) zur Fahrzeuglängsachse (10) verlaufend montiert ist und an seiner Unterseite Nuten (6a, b) mit einer Verengung (8) an der offenen Seite aufweist, in welchen Schiebemuttern (7a, b) längsverschieblich aber drehfest verschiebbar sind und/oder
- das Deformationsteil (5) in der Aufsicht betrachtet ein aus einem Profil, insbesondere einem Rohrprofil, bestehendes U-Teil (9) ist, welches mit dem verbindenden Schenkel in Richtung der Fahrzeuglängsachse (10) liegt und am einen freien Ende mit der fahrzeugseitigen Befestigung (3) und am anderen Ende mit der trittseitigen Befestigung (4) verbunden ist.

5. Tritthalterung (2) nach einem der vorhergehenden Ansprüche, **dadurch gekennzeichnet, dass**
- das Deformationsteil (5) aus Stahl oder Aluminium besteht und/oder
- die Trittstufe (1) aus Aluminium besteht.
(U-Teil)

6. Tritthalterung (2) nach einem der vorhergehenden Ansprüche, **dadurch gekennzeichnet, dass**
- das U-Teil (9) mit der trittseitigen Befestigung (4) verschweißt ist und/oder
- das U-Teil (9) mit einem freien Ende in einem Durchbruch der fahrzeugseitigen Befestigung (3) in Querrichtung (11) hindurchgesteckt ist.

7. Tritthalterung (2) nach einem der vorhergehenden Ansprüche, **dadurch gekennzeichnet, dass**
- die fahrzeugseitige Befestigung (3) einen am Längsträger des Fahrzeugchassis befestigten, insbesondere verschraubten, Hilfsrahmen (12) umfasst sowie insbesondere ein daran befestigtes, insbesondere verschraubtes, vertikal nach unten abragendes Aufnahmeprofil (13) und/oder
- die trittseitige Befestigung (4) eine vom freien Ende des U-Teiles (9) unter die Trittstufe (1) in Richtung der Längsachse (10) ragende Strebe (14) aufweist, die über Bohrungen (15a, b) von der Unterseite in die Schiebemuttern (7a, b) der Trittstufe (1) hinein verschraubt ist.
(Sprengbüchse)

8. Tritthalterung (2) nach einem der vorhergehenden Ansprüche, **dadurch gekennzeichnet, dass**
das Deformationsteil (5) eine Sprengbuchse (16) sowie einen im Deformationsfall darin eindringenden Sprengzapfen (17) aufweist, die so dimensioniert sind, dass beim Eindringen der Zapfen (17) die Buchse (16) aufweitet und sprengt, indem entweder das Innere der Buchse (16) und/oder das Äußere des Zapfens (17) konisch gestaltet ist.
(Profil als Deformationsteil)

9. Tritthalterung (2) nach einem der vorhergehenden Ansprüche, **dadurch gekennzeichnet, dass**
- das Deformationsteil ein Profilteil, insbesondere ein Rohrprofil (18) ist, welches in Deformationsrichtung (10') angeordnet ist und/oder
- zwischen den freien Schenkeln des U-Teiles als Deformationsteil (5) ein weiteres Deformationsteil (5), insbesondere bestehend aus Sprengbuchse (16) und Sprengzapfen (17) oder in Form eines Rohrprofils (18), in Deformationsrichtung (10') angeordnet ist.

10. Fahrzeug (20) mit
- einer Trittstufe (1),
- die über wenigstens eine, insbesondere wenigstens zwei in Querrichtung (11) beabstandete, Tritthalterungen (2) gemäß einem der vorhergehenden Ansprüche am Fahrzeug (20), insbesondere dem Heck des Fahrzeuges (20) befestigt ist.

11. Fahrzeug (20) nach Anspruch 10,
**dadurch gekennzeichnet, dass**
in der Aufsicht betrachtet das Deformationsteil (5) wenigstens teilweise unterhalb des Fahrzeuges (20) angeordnet ist.
